# EUROPÄISCHE PATENTSCHRIFT

(11) **EP 1 104 379 B1**
(45) Veröffentlichungstag und Bekanntmachung des Hinweises auf die Patenterteilung: **16.04.2003**
(21) Anmeldenummer: 99934448.4
(22) Anmeldetag: 11.08.1999
(51) Int. Cl.: B62D 33/04, F16B 5/00

(54) **PROFILPAARUNG AUS JEWEILS ZWEI IN ABSTAND VERLAUFENDE GURTWÄNDE AUFWEISENDEN PROFILEN**
PAIRING OF TWO PROFILED SECTIONS WITH INTERSPACED FLANGE WALLS
APPARIEMENT DE DEUX PROFILES COMPORTANT DES PAROIS DE MEMBRURE ECARTEES

(30) Priorität: 14.08.1998 DE 19836822
(43) Veröffentlichungstag der Anmeldung: 06.06.2001
(73) Patentinhaber: Alcan Technology & Management AG, 8212 Neuhausen am Rheinfall (CH)
(72) Erfinder: LEUTENEGGER, Simon, CH-8006 Zürich (CH)
(86) Internationale Anmeldenummer: CH9900373
(87) Internationale Veröffentlichungsnummer: WO00009384

(56) Entgegenhaltungen:
- EP-A- 0 153 463
- EP-A- 0 825 062
- DE-U- 9 311 087
- FR-A- 2 746 481

## Beschreibung

Die Erfindung betrifft eine Profilpaarung aus jeweils zwei in Abstand verlaufende, durch Querwände verbundene Gurtwände aufweisenden Profilen -- insbesondere aus einer Aluminiumlegierung stranggepresste Profile --, nach dem Obergriff des Patentanspruches 1.

Eine solche Profilpaarung ist in der EP 0 825 062 A1 beschrieben. Der eine Teil der Profilpaarung weist eine Einsatznut rechteckigen Querschnittes auf, in welche ein stegartiges Verbindungselement des anderen Paarungspartners eingesteckt wird. Durch diese Ausbildung können auf leichte Art und Weise lange Strangpressprofile entlang ihrer Längsseite gegenseitig ineinandergesteckt und dann verschweißt werden. Die Passungen von Einsatznut und stegartigem Verbindungsteil sind so eng, dass ein Formschluss entsteht, was in der Praxis äußerst schwierig ist, da auch präzis gefertigte Strangpressprofile über ihre Länge Dickentoleranzen aufweisen.

Durch die FR 2 746 481 A1 wird eine Profilpaarung dargestellt, bei der in Draufsicht ein stegartigen Endbereich in einen taschenförmigen Endbereich eingeschoben wird, wonach der außenliegende Teil der Tasche an den innenliegenden Partner durch Verformen herangeführt wird.

Eine Profilpaarung ist auch der Schrift zum DE 296 14 329 U1 der Anmelderin zu entnehmen. Eine von einer Gurtwand gekröpft abragende Einsatznase rechteckigen Querschnitts wird in eine Einsatznut anderen Querschnitts eingesetzt. Diese Einsatznut wird zum Profilinneren hin von einer gekrümmten Lippenleiste begrenzt. Die andere Gurtwand des Profils ist mit einer Anschlussrippe ausgestattet, die einer Anschlussrippe des zweiten Profils anliegt.

Im "Aluminium-Taschenbuch" Düsseldorf 1974, 13. Auflage, Seite 830, werden Flächenverbindungen für Leichtmetallteile beschrieben. Diese Literaturstelle erwähnt zudem auf Seite 827 sog. Stumpfnahtverbindungen mit Schweißfuge und Badsicherung für Strangpressprofile.

Ein Mangel beim Zusammenfügen von Profilpaarungen ist in dem Zwang genauer Ausrichtung der zu verbindenden Teile zueinander zu sehen. Die Gurtoberflächen der benachbarten Profile sind oftmals zueinander versetzt, anstatt eine Ebene zu bilden, oder die Profilkanten überklettern einander beim thermischen Zusammenfügen der Profile. Solche Mängel zu beseitigen sowie gegebenenfalls zusätzliche Schweisshilfen anzubieten, hat sich der Erfinder zum Ziel gesetzt.

Zur Lösung dieser Aufgabe führt die Lehre der unabhängigen Ansprüche; die Unteransprüche geben günstige Weiterbildungen an. Zudem fallen in den Rahmen der Erfindung alle Kombinationen aus zumindest zwei der in der Beschreibung, der Zeichnung und/oder den Ansprüchen offenbarten Merkmale.

Erfindungsgemäß weist sowohl der rippenartige Verbindungsteil, auch Steckrippe genannt, als auch die ihn aufnehmende nutartige Längseinformung eine querschnittlich teilkreisförmige Kontur auf, und das freie Ende des rippenartigen Verbindungsteils des einen Profils ist an der Wandung der nutartigen Einformung des anderen Profils zentrierbar geführt. Die Profilaußenflächen der Profile sollen in zentriertem Zustand miteinander fluchten.

Vorteilhafterweise soll der Radius der teilkreisförmigen Kontur der nutartigen Einformung größer sein als der Radius der entsprechenden teilkreisförmigen Kontur des Verbindungsteils. Dank dieser Ausgestaltung erfolgt durch die Schweißspannungen eine Zwangszentrierung der Teile ohne Spiel; der kleinere Radius gleitet stets bis auf den vom größeren Radius bestimmten Grund herunter. Da somit der kleine Radius an jenem vom großen Radius bestimmten Grund einen definierten Anschlagpunkt aufweist, kann ein vorgesehener Schweißspalt genau definiert werden.

Zur weiteren Verbesserung des Sitzes beider Anschlusspartner kann die teilkreisförmige Kontur der Längseinformung zur Profilaussenfläche hin durch die tangierende Innenfläche der Nase fortgesetzt werden. Das Kragmass der Nase kann zumindest der Wanddicke der Querwand bzw. der Gurtwände der Profile entsprechen.

Nach einem weiteren Merkmal der Erfindung soll die Stirnfläche der Nase mit einer der Längsnut zugeordneten geneigten Pultfläche einen sich zur Längsnut hin verjüngenden Rinnenraum bilden; sowohl die Pultfläche als auch die Stirnfläche der Nase sind bevorzugt in einem Winkel zur Profiloberfläche hin so geneigt, dass sich ein Öffnungswinkel jenes Rinnenraumes von beispielsweise 70° ergibt.

Dank der erörterten Massgaben entstehen an dem eine sich beim Verbindungsvorgang bildende Schmelzschweissnaht aufnehmenden Rinnenraum eine Schweissfuge und eine Badsicherung.

Zwischen dem Rinnenraum und jener Längsnut ergibt sich ein diese verbindender Spalt, der erfindungsgemäss von den Unterkanten der Stirnfläche des einen Profils sowie der von dem anderen Profil -- oberhalb des aus der Ebene der Gurtwand in Richtung auf die Profilmittellinie hin versetzten rippenartigen Verbindungsteils -- angebotenen Pultfläche begrenzt wird. Die Spaltbreite entspricht bei einer bevorzugten Ausführung 1/20 bis 1/3 der Längsnutbreite. Diese Maßgaben können beispielsweise durch die Gestaltung der Paarung Steckrippe / Einsatznut erreicht werden; wie oben erwähnt, kann durch das Anstoßen des rippenartigen Verbindungsteils am Grunde der Einformung die Spaltbreite beim Konstruieren des Profils genau vordefiniert werden.

Vorteilhafterweise soll die Pultfläche einen die Längsnut teilweise übergreifenden Abschnitt der Gurtwand begrenzen, Wobei die Breite des hinterschnittenen Nutabschnitts bevorzugt etwa einem Drittel der Nutenbreite entspricht. Dadurch mündet jener Spalt mittig -- oder geringfügig aussermittig - in die Längsnut.

Im Rahmen der Erfindung liegt auch die beschriebene Verbindungspaarung an beiden Gurtwänden vorzusehen, wobei sich die Rinnenräume jeweils zur Gurtaussenseite hin -- also gegenläufig -- öffnen.

Eine weitergehende Stabilität der verbundenen beiden Profile wird dann erreicht, wenn die Längseinformung/en in eine die Gurtwände des einen Profils verbindenden Querwand eingebracht ist/sind; diese Querwand gewährleistet die genaue Lage der Längseinformungen und unterstützt dadurch die Sicherheit der Verbindung. Dank deren wird der oben erorterte Spalt zwischen Rinnenraum und Längsnut exakt definiert.

Im Zusammenhang mit der erfindungsgemäßen Ausgestaltung ist ein Verfahren zum Verbinden einer Profilpaarung mittels eines Schweißvorganges zu sehen, bei dem in an sich bekannter Weise vor dem thermischen Verbinden zumindest ein rippenartiger Verlängerungsteil des einen Profils in eine dieses teilweise aufnehmende Vertiefung des anderen Profils eingefahren wird. Erfindungsgemäß wird nun das freie Ende des Verbindungsteils an der Wandung der Vertiefung so geführt, dass während der thermischen Beeinflussung des Werkstoffes die Verbindungspaarung aus Verbindungsteil und Vertiefung zentriert wird; der Versatz zwischen den benachbarten Profiloberflächen sowie das gegenseitige Überklettern der Gurtwandenden im Bereich des Rinnenraumes werden minimiert. Es erfolgt also -- wie gesagt -- eine Selbstzentrierung während des Schweissvorganges durch die dabei entstehenden Spannungen.

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt in
- Fig. 1:: einen Querschnitt durch zwei einander -- beispielsweise in einer Seitenwand eines Fahrzeuges -- zugeordnete Strangpressprofile;
- Fig. 2:: den Stoßbereich der Strangpressprofile als vergrößerten Ausschnitt aus Fig. 1;
- Fig. 3, 4:: jeweils den Endbereich eines der Strangpressprofile.
- Fig. 5:: ein vergrößertes Detail aus Fig. 2, 4;
- Fig. 6:: einen Querschnitt durch eine andere Paarung zweier Strangpressprofile.

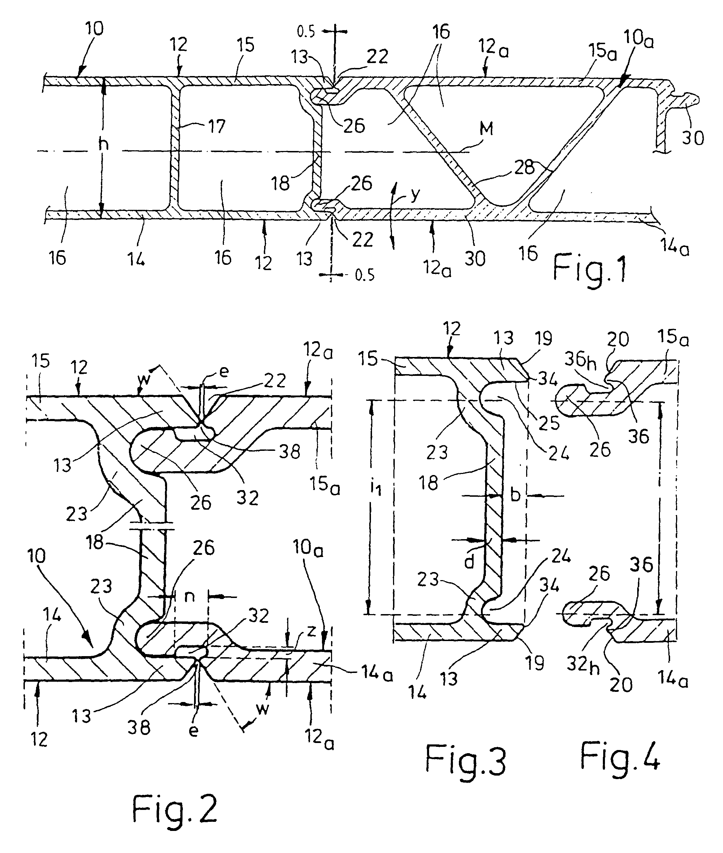

Ein aus einer Aluminiumlegierung stranggepresstes Hohlprofil 10 der Höhe h von hier 50 mm weist gemäss Fig. 1, 2 zwei deren Außenflächen 12 bestimmende Gurtwände 14, 15 und letztere verbindende parallele -- Kammern 16 begrenzende --Querwände 17, 18 auf. Die beiden Gurtwände 14, 15 ragen mit Nasen 13 über die zu einem benachbarten Hohlprofil 10ₐ hin gerichtete -- in Fig. 1 rechte -- endwärtige Querwand 18 um ein Kragmass b von etwa 4 mm hinaus, das geringfügig länger ist als die Wanddicke d von 3 mm der Querwand 18.

Die Stirnflächen 19 der Nasen 13 sind endwärts in einem Winkel w von etwa 55° zur Profilaußenfläche 12 so geneigt, dass sie jeweils mit einer entsprechend geneigten -- von einer Endkante einer Gutwand 14ₐ bzw. 15ₐ des anderen Hohlprofils 10ₐ gebildeten -- Pultfläche 20 einen Rinnenraum 22 in der querschnittlichen Form eines -- sich nach aussen öffnenden -- gleichschenkeligen Dreiecks bestimmen.

An jede der beiden Nasen 13 schliesst zur Profilmittellinie M hin querschnittlich eine in die Querwand 18 -- unter Bildung gekrümmter Verbindungsbereiche 23 -- eingeformte Einsatznut oder Längseinformung 24 teilkreisförmiger Kontur an; letztere wird zur Profilaussenseite hin durch die tangential von ihr ausgehende Innenfläche 25 der jeweiligen Nase 13 einseitig verlängert.

Die Längseinformungen 24 nehmen jeweils eine endwärts entsprechend teilkreisförmig gestaltete Einsatznase oder Steckrippe 26 des anderen Hohlprofils 10ₐ auf; der mittige Abstand i der -- zur anschließenden Gurtwand 14ₐ, 15ₐ höhenversetzten -- Steckrippen 26 voneinander entspricht dem Mitteabstand i₁ jener Längseinformung 24. Die Gurtwände 14ₐ, 15ₐ des in der Zeichnung rechten Hohlprofils 10ₐ sind durch geneigte Zwischenwände 28 verbunden. An den Enden der Hohlprofile 10, 10ₐ können beispielsweise glatte Querwände oder Querwände mit Anschlusselementen vorgesehen sein, etwa mit nach außen ragenden Steckrippen 26a, deren Querschnitt nahezu einer Pfeilspitze entspricht.

In die Steckrippe 26 ist am Übergang zur Pultfläche 20 eine Längsnut 32 so eingeformt, dass die Pultfläche 20 einen hinterschneidenden Nutabschnitt 32ₕ begrenzt, dessen Breite n₁ bei einer Nutbreite n von hier 8 mm etwa 3 mm misst, die Nutentiefe z etwas mehr als 2 mm. Die Breite q der Steckrippe 26 beträgt hier 11,5 mm.

Die beiden Hohlprofile 10, 10ₐ werden mittels ihrer beiden Steckpaarungen 24/26 aneinandergefügt, wobei die der Profilmittellinie M zugekehrten und einander gegenüberliegenden Unterkanten 34, 36 der Stirnfläche 19 bzw. der Pultflächen 20 einen Spalt 38 der Weite e von etwa 0,5 mm begrenzen; dieser verbindet den beschriebenen Rinnenraum 22 mit der -- von der Nase 13 des einen Hohlprofils 10 zu einem Hohlraum abgedeckten -- Längsnut 32 des anderen Hohlprofils 10ₐ. Jener Spalt 38 ist dank des Formschlusses zwischen den Steckrippen 26 und den sie aufnehmenden Einsatznuten oder Längseinformungen 24 definiert.

Die Fig. 1, 2 deuten im übrigen das Ende eines Hohlprofils 10ₐ an, dessen Steckrippen 26 in größerem Abstand zu einer Querwand 18 oder Zwischenwand 28 liegen, damit wenigstens eine der Gurtwände 14, 15 einen in Pfeilrichtung y frei einstellbaren Lappen 30 anbietet.

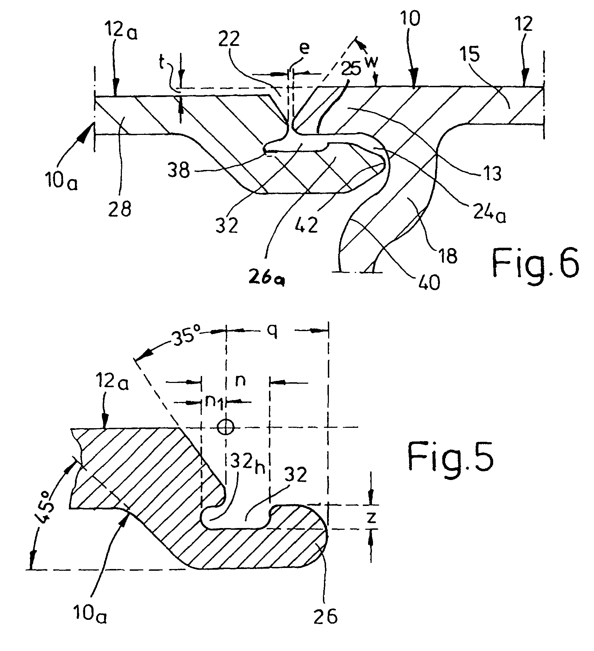

In der Ausführung der Fig. 6 ist die Längseinformung 24ₐ nicht für einen Formschluss ausgebildet; sie weist ebenfalls einen querschnittlich teilkreisähnlichen Abschnitt auf, der -- in Fig. 6 -- nach unten hin in eine die Längseinformung 24ₐ öffnende, bei 40 angedeutete Krümmungslinie übergeht; in der so ausgebildeten Längseinformung 24ₐ kann sich die eine gratartige Endlinie 42 anbietende -- oder in einer anderen Ausgestaltung querschnittlich teilkreisförmige -- Steckrippe 26a selbstzentrieren. Beim Zusammenschweißen der Hohlprofile 10, 10ₐ ergibt sich hier eine selbstzentrierende Wirkung durch die entstehenden Spannungen; der Kantenversatz, d.h. der senkrecht zur Profilmittellinie M entstehende Abstand t der einen Profilaußenfläche 12 von der anderen Profilaußenfläche 12, 12ₐ -- die beide eine Gurtoberfläche bilden -- sowie ein mögliches Überklettern werden minimiert. Die -- größeren Verzug aufnehmende -- Schweißbadsicherung ist an der längeren Nase 13 vorgesehen, also an einer Innenwand, die nicht Sichtfläche ist.

## Patentansprüche

1. Profilpaarung aus jeweils zwei in Abstand verlaufende, durch Querwände (17, 18) verbundene Gurtwände (14, 15; 14ₐ, 15ₐ) aufweisenden Profilen (10, 10ₐ), insbesondere aus einer Aluminiumlegierung stranggepresster Profile, bei der ein rippenartiges Verbindungsteil (26, 26a) des einen Profils (10ₐ) in eine nutartige Einformung (24ₐ) des anderen Profils (10) eingebracht wird und anschliessend die Profile an dem Verbindungsteil miteinander verschweißt werden, wobei das rippenartige Verbindungsteil eine zur Profilaußenfläche offene Längsnut (32) aufweist, die in Schweißlage wenigstens teilweise von einer Nase (13) des anderen Profils übergriffen ist,
**dadurch gekennzeichnet,**
**dass** sowohl der rippenartige Verbindungsteil (26, 26a) als auch die ihn aufnehmende nutartige Einformung (24ₐ) querschnittlich eine teilkreisförmige Kontur aufweisen, so dass das freie Ende (42) des rippenartigen Verbindungsteils an der Wandung der Einformung zentrierbar geführt ist.

2. Profilpaarung nach Anspruch 1, **dadurch gekennzeichnet, dass** der Radius der teilkreisförmigen Kontur der nutartigen Einformung (24ₐ) grösser ist als der Radius der teilkreisförmigen Kontur des Verbindungsteils (26, 26a).

3. Profilpaarung nach Anspruch 1 oder 2, **dadurch gekennzeichnet, dass** die nutartige/n Längseinformung/en (24, 24ₐ) in eine der die Gurtwände (14, 15; 14ₐ, 15ₐ) des einen Profils (10, 10ₐ) verbindenden Querwände (18) eingabracht ist/sind.

4. Profilpaarung nach Anspruch 3, **dadurch gekennzeichnet, dass** an die teilkreisförmige Kontur der nutartigen Einformung (24ₐ) eine von der Einformung weg gerichtete Krümmungslinie (40) einer Querwand (18) anschliesst.

5. Profilpaarung nach Anspruch 1 oder 2, **dadurch gekennzeichnet, dass** die teilkreisförmige Kontur der nutartigen Einformung (24, 24ₐ) zur Profilaußenfläche (12) hin durch die tangierende Innenfläche (25) der Nase (13) fortgesetzt ist.

6. Profilpaarung nach Anspruch 1, **dadurch gekennzeichnet, dass** die Stirnfläche (19) der Nase (13) mit einer der Längsnut (32) zugeordneten geneigten Pultfläche (20) einen sich zur Längsnut hin verjungenden Rinnenraum (22) bildet.

7. Profilpaarung nach Anspruch 6, **dadurch gekennzeichnet, dass** sowohl die Pultfläche (20) als auch die Stirnfläche (19) der Nase (13) in einem Winkel (w) zur Profiloberfläche (12, 12ₐ) hin geneigt ist.

8. Profilpaarung mit aus der Ebene der Gurtwand (14, 15; 14ₐ, 15ₐ) in Richtung auf die Profilmittellinie (M) hin versetztem, rippenartigem Verbindungsteil (26, 26a) nach Anspruch 6 oder 7, **dadurch gekennzeichnet, dass** die benachbarten Unterkanten (34, 36) von Stirnfläche (19) und Pultfläche (20) einen Spalt (38) begrenzen, der den Rinnenraum (22) mit der von der Nase (13) des einen Profils (10) zu einem Hohlraum abgedeckten Längsnut (32) verbindet.

9. Profilpaarung nach Anspruch 8, **gekennzeichnet durch** eine Spaltbreite (e), die etwa einem Zwanzigstel bis einem Drittel der Breite (n) der Längsnut (32) entspricht.

10. Profilpaarung nach einem der Ansprüche 6 bis 9, **dadurch gekennzeichnet, dass** die Pultfläche (20) einen die Längsnut (32) teilweise übergreifenden Abschnitt der Gurtwand (14ₐ, 15ₐ) begrenzt.

11. Profilpaarung nach Anspruch 10, **dadurch gekennzeichnet, dass** die Breite des hinterschnittenen Nutabschnitts (32ₙ) etwa einem Drittel der Nutenbreite (n) entspricht.

12. Profilpaarung nach einem der Anspruche 3 bis 11, **dadurch gekennzeichnet, dass** die Querwand (18) an dem den rippenartigen Verbindungsteil/en (26a) vorgesehen ist.

13. Profilpaarung nach einem der Ansprüche 1 bis 12, **dadurch gekennzeichnet, dass** die Verbindungspaarung (24, 26 oder 24ₐ, 26ₐ) für die Hohlprofile (10, 10ₐ) an deren beiden Gurtwänden (14, 14ₐ bzw. 15, 15ₐ) vorgesehen ist.

14. Profilpaarung nach einem der Ansprüche 1 bis 13, **dadurch gekennzeichnet, dass** das rippenartige Verbindungsteil (26, 26a) in Abstand zu einer Querwand (18) oder einer Zwischenwand (28) des Hohlprofils (10ₐ) von dessen Gurtwand (14ₐ, 15ₐ) abragt.

15. Profilpaarung nach einem der Ansprüche 1 bis 14, **dadurch gekennzeichnet dass** wenigstens eine Gurtwand (14, 15) mit in ihrem Abstand zur Profilmittellinie (M) begrenzt einstellbarer lappenartiger Anformung (30) vorgesehen ist.

## Claims

1. Profile mating system composed in each case of two profile sections (10, 10a) running at a distance and possessing girdle walls (14, 15; 14a, 15a) connected by transverse walls (17, 18), in particular profile sections extruded from an aluminium alloy, in which one rib-like connecting part (26, 26a) of one profile section (10a) is introduced into a groove-like moulding (24a) of the other profile section (10) and subsequently the profile sections are welded to one another at the connecting part, wherein the rib-like connecting part possesses a longitudinal groove (32) open to the outer surface of the profile which in the welding position is engaged over at least in part by a head (13) of the other profile section, **characterised in that** both the rib-like connecting part (26, 26a) and the groove-like moulding (24a) accommodating it have a contour which is partly circular in cross-section so that the free end (42) of the rib-like connecting part is guided in centrable manner against the wall of the moulding.

2. Profile mating system according to Claim 1, **characterised in that** the radius of the partly circular contour of the groove-like moulding (24a) is greater than the radius of the partly circular contour of the connecting part (26, 26a).

3. Profile mating system according to Claim 1 or 2, **characterised in that** the groove-like longitudinal moulding(s) (24, 24a) is (are) introduced into transverse walls (18) connecting the girdle walls (14, 15; 14a, 15a) of one profile section (10, 10a).

4. Profile mating system according to Claim 3, **characterised in that** adjoining the partly circular contour of the groove-like moulding (24a) is a line of curvature (40) of a transverse wall (18) facing away from the moulding.

5. Profile mating system according to Claim 1 or 2, **characterised in that** the partly circular contour of the groove-like moulding (24, 24a) is continued towards the outer surface (12) of the profile through the touching inner surface (25) of the head (13).

6. Profile mating system according to Claim 1, **characterised in that** the end face (19) of the head (13) together with an inclined desk-like surface (20) assigned to the longitudinal groove (32) forms an channel space (22) tapering towards the longitudinal groove.

7. Profile mating system according to Claim 6, **characterised in that** both the desk-like surface (20) and the end face (19) of the head (13) are inclined at an angle (w) to the surface (12, 12a) of the profile.

8. Profile mating system having a rib-like connecting part (26, 26a) offset in the direction of the central line (M) of the profile according to Claim 6 or 7, **characterised in that** the neighbouring lower edges (34, 36) of the end face (19) and desk-like surface (20) bound a gap (38) which connects the channel space (22) to the longitudinal groove (32) covered by the head (13) of one profile (10) to form a cavity.

9. Profile mating system according to Claim 8, **characterised by** a gap width (e) which is equal to approximately one twentieth to one third of the width (n) of the longitudinal groove (32).

10. Profile mating system according to Claims 6 to 9, **characterised in that** the desk-like surface (20) bounds a section of the girdle wall (14a, 15a) partly engaging over the longitudinal groove (32).

11. Profile mating system according to Claim 10, **characterised in that** the width of the undercut groove section (32h) is approximately equal to one third of the width (n) of the groove.

12. Profile mating system according to one of Claims 3 to 11, **characterised in that** the transverse wall (18) is provided on the rib-like connecting part(s) (26a).

13. Profile mating system according to one of Claims 1 to 12, **characterised in that** the connective mating devices (24, 26 or 24a, 26a) for the hollow profiles (10, 10a) are provided on their two girdle walls (14, 14a or 15, 15a).

14. Profile mating system according to one of Claims 1 to 13, **characterised in that** the rib-like connecting part (26, 26a) projects from the girdle wall (14a, 15a) of the hollow profile (10a) at a distance from a transverse wall (18) or a partition wall (28) thereof.

15. Profile mating system according to one of Claims 1 to 14, **characterised in that** at least one girdle wall (14, 15) is provided with at least one lug-like attachment (30) moulded on having limited adjustability of its distance from the central line (M) of the profile.

## Revendications

1. Appariement de deux profilés (10, 10ₐ) comportant des parois de membrure (14, 15; 14ₐ, 15ₐ) écartées, reliées par des parois transversales (17, 18) - en particulier de profilés extrudés en alliage d'aluminium,
pour lequel une pièce de liaison en forme de nervure (26, 26ₐ) d'un profilé (10ₐ) est introduite dans un moulage en forme de rainure (24ₐ) de l'autre profilé (10) et les profilés sont ensuite soudés ensemble à la pièce de liaison, la pièce de liaison en forme de nervure présentant une rainure longitudinale (32) ouverte vers la surface extérieure du profilé, qui, en position de soudage, est au moins partiellement recouverte par un nez (13) de l'autre profilé,
**caractérisé en ce que**
tant la pièce de liaison en forme de nervure (26, 26ₐ) que le moulage longitudinal (24ₐ) en forme de rainure qui l'accueille présentent un contour de section en arc de cercle, de sorte que l'extrémité libre (42) de la pièce de liaison en forme de nervure est guidée de manière permettant le centrage sur la paroi du moulage.

2. Appariement de deux profilés suivant la revendication 1, **caractérisé en ce que** le rayon du contour en arc de cercle du moulage en forme de rainure (24ₐ) est plus grand que le rayon du contour en arc de cercle correspondant des pièces de liaison (26, 26ₐ).

3. Appariement de deux profilés suivant la revendication 1 ou 2, **caractérisé en ce que** le ou les moulages longitudinaux (24, 24ₐ) sont réalisés dans une paroi latérale (18) reliant les parois de membrure (14, 15; 14ₐ, 15ₐ) d'un profilé (10, 10ₐ).

4. Appariement de deux profilés suivant la revendication 3, **caractérisé en ce qu'**une ligne de courbure (40) d'une paroi latérale (18) s'écartant du moulage se raccorde au contour en arc de cercle du moulage en forme de rainure (24ₐ).

5. Appariement de deux profilés suivant la revendication 1 ou 2, **caractérisé en ce que** le contour en arc de cercle du moulage en forme de rainure (24, 24ₐ) se poursuit vers la surface extérieure du profilé (12) par la. surface intérieure tangente (25) du nez (13).

6. Appariement de deux profilés suivant la revendication 1, **caractérisé en ce que** la surface frontale (19) du nez (13) forme avec une surface inclinée en forme de pupitre (20) de la rainure longitudinale (32) un espace en forme de goulotte (22) se rétrécissant vers la rainure longitudinale.

7. Appariement de deux profilés suivant la revendication 6, **caractérisé en ce que** tant la surface en forme de pupitre (20) que la surface frontale (19) du nez (13) forment un angle (w) par rapport à la surface du profilé (12, 12ₐ).

8. Appariement de deux profilés avec pièce de liaison (26, 26ₐ) en forme de nervure décalée du plan de la paroi de membrure (14, 15; 14ₐ, 15ₐ) en direction de la ligne médiane (M) du profilé suivant la revendication 6 ou 7, **caractérisé en ce que** les arêtes inférieures (34, 36) de la surface frontale (19) et de la surface en forme de pupitre (20) délimitent un interstice (38) qui relie l'espace en forme de goulotte (22) à la rainure longitudinale (32) recouverte par le nez (13) d'un profilé creux (10) pour former un espace creux.

9. Appariement de deux profilés suivant la revendication 8, **caractérisé par** une largeur d'interstice (e) qui correspond environ à un vingtième à un tiers de la largeur (n) de la rainure longitudinale (32).

10. Appariement de deux profilés suivant l'une des revendications 6 à 9, **caractérisé en ce que** la surface en forme de pupitre (20) délimite une partie de la paroi de membrure (14ₐ, 15ₐ) recouvrant en partie la rainure longitudinale (32).

11. Appariement de deux profilés suivant la revendication 10, **caractérisé** la largeur de la partie de rainure en contre-dépouille (32ₕ) correspond à environ un tiers de la largeur de la rainure (n).

12. Appariement de deux profilés suivant l'une des revendications 3 à 11, **caractérisé en ce que** la paroi transversale (18) est prévue sur la ou les pièces de liaison en forme de nervure (26ₐ).

13. Appariement de deux profilés suivant l'une des revendications 1 à 12, **caractérisé en ce que** liaison d'appariement (24, 26 ou 24ₐ, 26ₐ) pour les profilés creux (10, 10ₐ) est prévue à leurs deux parois de membrure (14, 14ₐ ou 15, 15ₐ).

14. Appariement de deux profilés suivant l'une des revendications 1 à 13, **caractérisé en ce que** la pièce de liaison en forme de nervure (26, 26ₐ) dépasse à distance d'une paroi transversale (18) ou d'une paroi intermédiaire (28) de la paroi de membrure (14ₐ 15ₐ) du profilé creux (10ₐ).

15. Appariement de deux profilés suivant l'une des revendications 1 à 14, **caractérisé en ce qu'**au moins une paroi de membrure (14, 15) est prévue avec un moulage en forme de languette (30) à distance réglable de manière limitée de la ligne médiane (M) du profilé.
